Europäisches Patentamt

European Patent Office

Office européen des brevets

(11) Veröffentlichungsnummer: **0 139 965**
**B1**

# (12) EUROPÄISCHE PATENTSCHRIFT

(45) Veröffentlichungstag der Patentschrift:
02.11.88

(21) Anmeldenummer: 84109830.4

(22) Anmeldetag: 17.08.84

(51) Int. Cl.⁴: **F 16 J 15/26,** F 16 J 15/56

(54) Dichtring für Kolbenstangen.

(30) Priorität: 25.08.83 CH 4648/83

(43) Veröffentlichungstag der Anmeldung:
08.05.85 Patentblatt 85/19

(45) Bekanntmachung des Hinweises auf die Patenterteilung:
02.11.88 Patentblatt 88/44

(84) Benannte Vertragsstaaten:
BE DE FR GB IT NL SE

(56) Entgegenhaltungen:
CH-A-501 169
DE-A-2 351 850
FR-A-574 952

(73) Patentinhaber: Schirmer, Alfred F., Im Tobel 7, CH-8706 Feldmeilen (CH)

(72) Erfinder: Schirmer, Alfred F., Im Tobel 7, CH- 8706 Feldmeilen (CH)

(74) Vertreter: Quehl, Horst Max, Dipl.- Ing., Seestrasse 640 Postfach 90, CH- 8706 Meilen/Zürich (CH)

**Beschreibung**

Die Erfindung betrifft einen Dichtring für Kolbenstangen gemäß dem Oberbegriff des Patentanspruchs 1.

Ein Dichtring dieser Art ist bekannt durch die CH-A-501 169. Sein Federelement besteht aus einem eine Lücke aufweisenden, nach innen spannenden Federring. Die Qualität der Abdichtung ist bei diesem Dichtring stark von der Maßgenauigkeit abhängig, da das Stoßspiel an dem radial überlappend ausgeführten Überlappungsstoß möglichst klein sein soll. Bereits kleine Durchmesserabweichungen der Kolbenstange und des Dichtringes bewirken ein nachteiliges Übereinanderschieben der Dichtringenden und eine ungleichmäßige Verteilung der Dichtkraft.

Durch die DE-A-2 351 850 ist ein Ölabstreifring bekannt, der zur Erzielung einer möglichst gleichmäßigen Verteilung der Andruckkräfte gegen die Kolbenstange und damit eines gleichmäßigeren Verschleißes besonders elastisch ausgeführt ist.

Durch die FR-A-574 952 ist schließlich eine Dichtanordnung bekannt, deren Dichtringteile sich an den Stoßstellen axial dichtend überlappen. Diese Dichtringteile liegen außen mit einer konischen Außenfläche an einer entsprechend geformten Innenfläche eines Fassungsringes an und werden durch jeweils eine axial wirkende Feder sowie durch die Bewegung der Kolbenstange angedrückt, so daß sich starke Anpreßkräfte gegen die Kolbenstange ergeben, die einen entsprechend schnellen Verschleiß zur Folge haben. Da kein schwimmender Kontakt vorhanden ist, erfolgt auch kein Ausgleich von geringen Querbewegungen der Kolbenstange.

Der Erfindung liegt die Aufgabe zugrunde, einen Dichtring der genannten Art zu finden, der ohne besondere Anforderungen an eine maßgenaue Anpassung an die Kolbenstange eine besonders gute und auch gasdichte Abdichtung bei geringem Reibungswiderstand an der Kolbenstange und bei geringem Verschleiß gewährleistet und hiefür außerdem keine oder keine wesentliche Einlaufphase benötigt. Die Lösung dieser Aufgabe erfolgt aufgrund der Merkmale des Patentanspruchs 1. Vorteilhafte Ausführungsformen der Erfindung ergeben sich aus der folgenden Beschreibung anhand der Zeichnung und sind Gegenstand der abhängigen Patentansprüche. Es zeigt:

Fig. 1 und 2   zwei Einbauanordnungen eines Paares von Dichtringen gemäß einer ersten Ausführungsform,

Fig. 3   eine zweite Ausführungsform eines in einem Gehäuseausschnitt angeordneten Dichtringes,

Fig. 4   eine Seitenansicht eines Dichtringes mit einer Querschnittsform nach Fig. 1 oder 2,

Fig. 5   eine Seitenansicht eines aufgeweiteten Dichtringes mit nur einem Überlappungsstoß,

Fig. 6   eine Seitenansicht eines Teiles eines Dichtringes in seinem Überlappungsbereich und

Fig. 7   eine Aufsicht auf den Ringbereich nach Fig. 6.

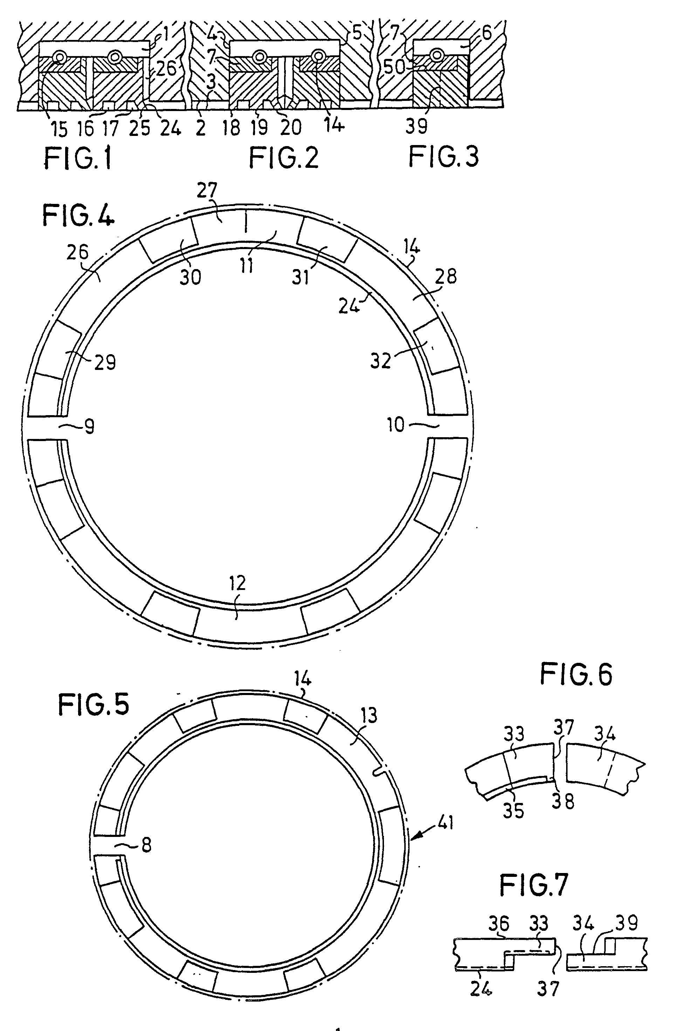

Die Fig. 1 und 2 zeigen den paarweisen Einbau von Dichtringen in einem ringförmig umlaufenden Ausschnitt 1 eines Maschinengehäuseteiles 2. Die Ausschnitte 1 haben senkrecht zur Kolbenstange 3 verlaufende Seitenwände 4, 5, an denen ebene Seitenflächen der Dichtringe anliegen.

Die Fig. 3 zeigt einen einzelnen Dichtring in einem seiner Breite angepaßten Gehäuseausschnitt 6. Die Gehäuseausschnitte 1 und 6 sind auf nichtdargestellte Weise übliche Weise mit Ölrückführungskanälen verbunden, so daß von der Kolbenstange 3 abgestreiftes Öl rückgeführt werden kann.

Damit die Dichtringe eine gasdichte Abdichtung gewährleisten, sind sie von einem Kammerring 7 umschlossen, der die Trennfuge 8 bzw. die Trennfugen 9, 10 des Dichtringes radial nach außen verschließt. Der Kammerring hat für die erforderliche Veränderbarkeit des Durchmessers des vorzugsweise biegsamen Dichtringes ebenfalls eine Trennfuge, die zu den Trennfugen 8 bzw. 9, 10 in Umfangsrichtung versetzt angeordnet ist.

Die paarweise Anordnung der Dichtringe entsprechend den Einbaubeispielen der Fig. 1 und 2 hat den Zweck, die Trennfuge 8 oder die Trennfugen 9, 10 in axialer Richtung zu verschließen, indem die Ringe eines Paares in Umfangsrichtung so versetzt zueinander eingebaut sind, daß ihre Trennfugen sich nicht überdecken können. Die Sicherung dieser versetzten Lage kann durch nicht dargestellte Stiftverbindungen erfolgen.

Jeder Dichtring der Dichtringpaare nach den Figuren 1 und 2 und der Dichtring nach Fig. 3 hat entweder zwei kreisbogenförmige Ringteile 11, 12, die durch zwei Trennfugen 9, 10 voneinander getrennt sind oder nur ein eine Trennfuge 8 aufweisendes Ringteil 13, die durch eine ringförmig umlaufende Schraubenfeder 14 zusammengehalten und an die Kolbenstange 3 angedrückt werden. Eine äußere, im Querschnitt der Feder angepaßte Nut 15 des Dichtringes oder der Dichtringteile ist für die Aufnahme der Feder 14 vorgesehen. Die Zugkraft der vorgespannten Feder 14 führt zu einem gleichmäßig über den Umfang des Dichtringes verteilten radial nach innen gerichteten Druck, der durch die Biegsamkeit des Dichtringes oder der Dichtringteile auch zu einer gleichmäßigen Verteilung des Anspreßdruckes der Dichtflächen des Dichtringes an die Oberfläche der Kolbenstange 3 führt.

Die in den Fig. 1 bis 3 dargestellten Dichtringe sind auf ihrer der Kolbenstange 3 zugekehrten Seite mit zwei parallel nebeneinander umlaufenden Nuten 16, 17 versehen, so daß der Dichtring 3 streifenförmige umlaufende Dichtflächen 18, 19, 20 aufweist. Die Nuten 16, 17 bzw. die streifenförmigen Dichtflächen 18, 19, 20 führen zu einer wesentlichen Verringerung der auf den Dichtring und gegen den Druck der Feder 14 radial nach außen wirkenden Kraft im Vergleich zu einer sich über die gesamte Breite des Dichtringes erstreckenden Dichtfläche. Diese Kraft ergibt sich durch den hydrodynamischen Öldruck im Dichtspalt aufgrund der Bewegung der Kolbenstange.·

Eine weitere Maßnahme zur möglichen Verringerung der Kraft der Feder 14 besteht im Vorsehen einer Hinterschneidung 24 an oder in der Nähe einer Kante 25 des Dichtrings, die eine Dichtfläche 20, 22 begrenzt. An dieser Hinterschneidung staut sich das von der Oberfläche der Kolbenstange 3 abgestreifte und durch die Bewegung der Kolbenstange herangeförderte Öl. Der Staudruck führt an der Hinterschneidung 24 zu einer radial nach innen gerichteten Druckkomponente, die einem Kippen des Dichtrings um ihre Querschnittsachse entgegenwirkt. Dies ist jedoch nur dadurch möglich, daß weiterhin radial an die Hinterschneidung nach außen angrenzend Freiräume 26, 27, 28 vorgesehen sind, die nur durch die für die seitliche Abstützung der Dichtringe erforderlichen ebenen Seitenflächen 29 bis 32 unterbrochen sind.

Beim Ausführungsbeispiel nach Fig. 4 hat jeder halbkreisförmige Ringteil 11 drei bogenförmige Freiräume 26, 27, 28, die durch die Seitenflächen 29 bis 32 begrenzt sind.

Es versteht sich jedoch, daß stattdessen auch zahlreiche schmalere von entsprechend schmalen Seitenflächen begrenzte Freiräume vorhanden sein können. Über diese Freiräume kann das abgestreifte Öl in die Ausnehmungen 1, 6 abgeleitet werden, ohne daß sich in ihnen ein Druck ausbilden kann, der an dem Dichtring radial nach außen drückt. Die Anordnung der Hinterschneidung und Freiräume 26, 27, 28 erfolgt auf der Seite des Dichtringes, die der zu erwartenden größeren, an der Kolbenstange 3 anhaftenden Ölmenge zugekehrt ist. Bei einem Dieselmotor ist dies die dem Kurbelgehäuse zugekehrte Seite.

Die Trennfugen 8 bzw. 9, 10 der Dichtringe sind als überlappender Stoß ausgeführt, so da durch die Überlappung der Stoßteile 33, 34 im eingebauten Zustand der Dichtringe in axialer Richtung keine Lücke auftritt, durch die Öl gelangen kann. Die Darstellungen der Fig. 4 und 5 bis 7 zeigen den Dichtring bevor die Stoßstellen miteinander überlappt sind.

Wie die Fig. 6 am besten zeigt, setzt sich die durch die Hinterschneidung 24 gebildete Rille 35 bis in die Stoßteile 33, 34 fort. In dem Ringende 36, das auf der die Hinterschneidung 24 aufweisenden Seite mit der Ausbildung des Überlappungsstoßes, abgesetzt ist, ergibt sich auch eine Versetzung der Rille 35. Um zu verhindern, dass eine Ölleckage in Umfangsrichtung entlang dieser Rille 35 auftreten kann, endet diese in Abstand von der Endfläche 37 dieses Ringendes 36. Am Ende der Rille 35 verbleibt somit eine Dichtfläche 38 des Überlappungsstoßes, die entsprechend der Größenveränderung des Dichtringes an der Dichtgegenfläche 39 des Überlappungsstoßes anliegt.

Für die Abdichtung der Kolbenstange 3 beim Auftreten von wechselnden Gasdrücken, wie es bei Kolbenkompressoren der Fall ist, ist der die Trennfugen 8, bzw. 9, 10 radial nach außen überdeckende Kammerring 7 in einer seitlichen äußeren Aussparung 50 eingepaßt, so daß die jeweilige Trennfuge nur auf einem seitlichen Teil ihrer in Richtung der Kolbenstange verlaufenden Breite überdeckt ist. Dadurch ergibt sich eine einseitige Gasdichtung an einer radial verlaufenden Seitenwand 4 des Gehäuseausschnittes 1 bzw. 6, so daß beim Nachlassen des Gasdruckes das abzudichtende Gas auf der radial nichtabdichtenden Dichtringseite zurückströmen kann. Dabei ergibt sich nicht nur eine verbesserte Dichtwirkung, sondern auch ein geringerer Verschleiß des Dichtringes, da er folglich nicht dauernd durch den maximalen Gasdruck in dem Gehäuseausschnitt radial nach innen gegen die Kolbenstange 3 gedrückt wird.

Als Material für einen erfindungsgemäßen Dichtring ist beispielsweise PTFE oder Polyimid mit einem die Gleiteigenschaft und/oder Temperaturbeständigkeit verbessernden Füllmaterial, z. B. aus Graphit, geeignet.

Durch Versuche mit einer Dichtpackung mit erfindungsgemäßen Dichtringen hat sich eine erhebliche Verringerung der Ölverluste aufgrund der verbesserten Dichtwirkung gezeigt, so daß demgegenüber eine Dichtpackung mit bekannten Dichtringen besonders in der Einlaufphase einen um das Vielfache höheren Ölverlust bewirkt. Bei der Anordnung, z. B. an einer 2-Takt-Dieselmaschine, kann durch die verbesserte Dichtwirkung auch die Häufigkeit der Ölwechsel stark verringert werden, da auch das Eindringen von Verunreinigungen in das Kurbelgehäuse wesentlich verringert wird.

Die Anordnung des Kammerringes 7 zwischen dem inneren Dichtring und dem außen vollständig umlaufenden Federelement 14 führt bei Verwendung eines Materials für beide Ringe mit guten Gleiteigenschaften, wie z.B. des zuvorgenannten Kunstsoffmaterials, zu einer reaktionsschnellen und gleichmäßigen Anpassung des gleichmäßig ausgeübten Druckes des Federelementes 14 auf die dynamischen Kräften ausgesetzten Dichtflächen.

**Patentansprüche**

1. Dichtring für Kolbenstangen mit senkrecht zu seiner Achse verlaufenden ebenen Seitenflächen für den schwimmenden Kontakt mit Seitenwänden (4, 5) einer Gehäusekammer (1, 6) oder mit der Seitenfläche eines zweiten Dichtringes und mit mindestens einem ihn umfassenden Federelement (14) für seinen elastischen Andruck an die Kolbenstange, wobei er mit mindestens einer einen Überlappungsstoß aufweisenden Trennfuge (8 - 10) an die Kolbenstange angrenzt, dadurch gekennzeichnet, daß er einen Kammerring (7) mit einer ebenen Seitenfläche für den schwimmenden Kontakt mit einer Seitenwand (4, 5) der Gehäusekammer (1, 6) aufweist, der sich mindestens bis über die in Umfangsrichtung verlaufende Dichtfläche (39) von einem oder von zwei axial dichtenden Überlappungsstößen erstreckt und der in einer seitlichen Aussparung (50) des Dichtringquerschnittes angeordnet ist, so daß er schmaler ist als der von ihm umschlossene Teil des Dichtringes, wobei die dichtenden Teile des Dichtringes aus einem Kunststoffmaterial bestehen.

2. Dichtring nach Anspruch 1, dadurch gekennzeichnet, daß er drei parallel zueinander umlaufende streifenförmige, für den Kontakt mit der Kolbenstange vorgesehene Dichtflächen (18 - 20) aufweist.

3. Dichtring nach Anspruch 1 oder 2, dadurch gekennzeichnet, daß an oder in der Nähe mindestens einer eine Dichtfläche (20) begrenzenden Kante (25) des Dichtringes eine umlaufende Hinterschneidung (24) vorgesehen ist und radial nach außen an diese Hinterschneidung Freiräume (26, 27, 28) angrenzen.

4. Dichtring nach Anspruch 3, dadurch gekennzeichnet, daß die Freiräume (26, 27, 28) an einer Seitenfläche des Dichtringes in Form von mehreren in Umfangsrichtung verteilten kreisbogenförmigen Aussparungen vorgesehen sind.

5. Dichtring nach Anspruch 4, dadurch gekennzeichnet, daß die Aussparungen (26, 27, 28) von Seitenflächenbereichen (29 - 32) des Dichtringes begrenzt sind, deren Breite kleiner ist als die Breite der Aussparungen (26, 27, 28).

6. Dichtring nach einem der Ansprüche 3 bis 5, dadurch gekennzeichnet, daß die umlaufende Hinterschneidung sich in den Überlappungsbereich hinein fortsetzt und mit einem eine Dichtfläche (38) bildenden Abstand von einer Endfläche (37) des Ringendes (36) endet.

7. Dichtring nach einem der Ansprüche 1 bis 6, dadurch gekennzeichnet, daß der Dichtring einschließlich des Kammerringes (7) aus Kunststoffmaterial besteht, so daß er biegsam ist, wobei er weniger als drei Trennfugen (8 - 10) aufweist.

## Claims

1. Seal ring for piston rods, having flat side surfaces running perpendicular to its axis, for floating contact with side walls (4, 5) of a casing chamber (1, 6) or with the side surface of a second seal ring, and having at least one spring element (14) enclosing the seal ring for its resilient contact pressure with the piston rod, whereby the seal ring abuts the piston rod with at least one overlap parting (8 - 10), characterized in, that it is provided with a chamber ring (7), having a flat side surface for flating contact with a side wall (4, 5) of the casing chamber (1, 6), extending at least over the sealing surface (39) running in circumferential direction of one or two axially sealing overlap partings and being arranged in a lateral recess (50) of the seal ring cross-section, so that it is narrower than that part of the seal ring which is enclosed by it, whereby the sealing parts of the seal ring are made of a plastic material.

2. Seal ring according to claim 1, characterized in, that it has three strip-shaped sealing surfaces (18 - 20) running around parallel to each other, provided for the contact with the piston rod.

3. Seal ring according to claim 1 or 2, characterized in, that at or in the vicinity of at least one seal strip edge (25), limiting a sealing surface (20, 22), an undercut (24) which runs around is provided and spaces (26, 27, 28) adjoin this undercut radially outwards.

4. Seal ring according to claim 3, characterized in, that said spaces (26, 27, 28) on one side surface of the seal ring are provided in the form of a number of arc-shaped recesses distributed in the circumferential direction.

5. Seal ring according to claim 4, characterized in, that the recesses (26, 27, 28) are limited by side surface regions (29 - 32) of the seal ring, the width of which is smaller than the width of the recesses.

6. Seal ring according to one of claims 3 to 5, characterized in, that the undercut running around continues into the overlap region and ending with a sealing surface (38) forming distance from an end surface (37) of the ring end (36).

7. Seal ring according to one of claims 1 to 6, characterized in, that the seal ring including the chamber ring (7) is made from plastic material, so that it is bendable, whereby it is provided with less than three partings (8 - 10).

## Revendications

1. Segment d'étanchéité pour tige de piston, avec des surfaces latérales planes perpendiculaires à son axe, pour le contact flottant avec des parois latérales (4, 5) d'une gorge de carter (1, 6) ou avec la surface latérale d'un deuxième segment d'étanchéité et avec au moins un élément de ressort (14) l'entourant pour l'appuyer élastiquement contre la tige de piston, ce segment étant contigu à la tige de piston avec au moins une fente de séparation (8 - 10) présentant un joint a recouvrement, caractérisé en ce que ce segment présente une bague de fond de gorge (7) avec une surface latérale plane pour son contact flottant avec une paroi latérale (4, 5) de la gorge de carter (1, 6), bague qui dépasse au moins jusqu'au delà de la surface d'étanchéité (39) s'étendant suivant la direction périphérique d'un ou de deux joints à recouvrement assurant l'étanchéité axiale, cette bague étant placée dans un évidement (50) sur le côté de la section du segment d'étanchéité, de telle sorte qu'elle soit plus étroite que la partie du segment d'étanchéité qu'elle enveloppe, les parties étanches du segment d'étanchéité étant constituées de matière plastique.

2. Segment d'étanchéité suivant la revendication 1, caractérisé en ce qu'il présente trois surfaces d'étanchéité (18 - 20) circulaires en forme de bandes, parallèles les unes aux autres, prévues pour le contact avec la tige de piston.

3. Segment d'étanchéité suivant l'une quelconque des revendications 1 ou 2, caractérisé en ce qu'une contre-dépouille circulaire (24) est prévue sur ou à proximité d'au moins une arête (25) du segment d'étanchéité limitant une surface d'étanchéité (20) et limitant radialement vers l'extérieur des espaces libres (26, 27, 28) de la contre-dépouille.

4. Segment d'étanchéité suivant la revendication 3, caractérisé en ce que les espaces libres (26, 27, 28) sont prévus sur une surface latérale du segment d'étanchéité sous la forme de plusieurs évidements en arc de cercle répartis dans la direction périphérique.

5. Segment d'étanchéité suivant la revendication 4, caractérisé en ce que les évidements (26, 27, 28) sont séparés par des zones de surface latérale (29 - 32) du segment d'étanchéité, zones dont la largeur est plus faible que celle des évidements (26, 27, 28).

6. Segment d'étanchéité suivant l'une quelconque des revendications 3 à 5, caractérisé en ce que la contre-dépouille circulaire se prolonge dans l'intérieur de la zone de recouvrement et se termine par une lèvre, constituant surface d'étanchéité, d'une surface terminale (37) de l'extrémité de bague (36).

7. Segment d'étanchéité suivant l'une quelconque des revendications 3 à 6, caractérisé en ce que le segment d'étanchéité, y compris la bague de fond de gorge (7), est réalisé en matière plastique de façon à être flexible, ce segment présentant moins de trois fentes de séparation (8 - 10).

FIG.1      FIG.2      FIG.3

FIG.4

FIG.5      FIG.6

FIG.7